# EUROPÄISCHE PATENTSCHRIFT

(11) **EP 2 020 541 B1**
(45) Veröffentlichungstag und Bekanntmachung des Hinweises auf die Patenterteilung: **13.01.2010**
(21) Anmeldenummer: 07015098.2
(22) Anmeldetag: 01.08.2007
(51) Int. Cl.: F16J 15/32, B21D 53/18, B23K 26/24, B23K 26/38

(54) **Verfahren zur Herstellung eines Dichtrings**
Method for manufacturing a sealing ring
Procédé destiné à la fabrication d'une bague d'étanchéité

(43) Veröffentlichungstag der Anmeldung: 04.02.2009
(73) Patentinhaber: Carl Freudenberg KG, 69469 Weinheim (DE)
(72) Erfinder: Stahl, Hermann, 71711 Steinheim (DE)

(56) Entgegenhaltungen:
- EP-A- 1 818 581
- WO-A-2006/075209
- DE-A1- 19 755 391
- GB-A- 1 369 312
- GB-A- 2 103 521
- US-A- 3 798 728
- US-B1- 6 513 219
- US-B1- 6 764 079

## Beschreibung

### Technisches Gebiet

Die Erfindung betrifft ein Verfahren zur Herstellung eines Dichtrings, bei dem aus einem Endlos-Blechstreifen zunächst ein Ring gebildet wird, bei dem die einander berührenden Kanten des Blechstreifens stoffschlüssig miteinander verbunden werden.

### Stand der Technik

Ein derartiges Verfahren ist aus der DE 197 55 391 A1 bekannt. Dabei wird aus einem Blechstreifen zunächst ein Ring hergestellt und anschließend durch Nachverformen in die Gestalt eines Tragringes überführt. Die sich berührenden Kanten werden durch Schweißen oder durch Löten stoffschlüssig miteinander verbunden. Das Nachverformen kann durch Rollen oder Tiefziehen erfolgen, wobei der Tragring mit diversen Konturen versehen werden kann. Generell ist bei Tragringen zumindest außenumfangsseitig eine hohe Oberflächengüte erforderlich, da diese Fläche eine statische Dichtfläche bildet, um den Dichtring gegenüber einem Gehäuse abzudichten. Dazu sind eine gute Rundheit und eine geringe Rauheit erforderlich. Bei der Verbindung durch Löten ist nachteilig, dass zum Erreichen einer guten Kapillarwirkung der Abstand der sich berührenden Kanten gering ist und dass die Oberflächen benetzbar sein müssen. Bei einer stoffschlüssigen Verbindung durch Schweißen ergeben sich häufig konkave Einwölbungen an der Verbindungsstelle, die aus einer Materialwanderung resultieren. Aus diesen konkaven Einwölbungen können sich Undichtigkeiten des Dichtrings ergeben. Des Weiteren müssen die Kanten des Blechstreifens möglichst gleichmäßig ausgebildet sein.

Aus der GB 1 369 312 und der US 3,798,728 ist ein Verfahren zur Herstellung eines ringförmigen Gegenstandes bekannt, bei dem ein Blechstreifen zu einem ring geformt werden und die einander berührenden Endes des Blechstreifens miteinander verschweißt werden.

### Darstellung der Erfindung

Der Erfindung liegt die Aufgabe zugrunde, das vorbekannte Verfahren so weiter zu entwickeln, dass eine hochwertige und gleichmäßige Schweißnaht erstellt werden kann.

Diese Aufgabe wird mit den Merkmalen von Anspruch 1 gelöst. Auf vorteilhafte Ausgestaltungen nehmen die Unteransprüche Bezug.

Bei dem erfindungsgemäßen Verfahren zur Herstellung eines Dichtrings wird aus einem Endlos-Blechsteifen ein Ring gebildet, wobei der Blechstreifen durch Laser-Trennen auf den Ringumfang abgelängt wird und die einander berührenden Kanten des Blechstreifens durch Laserschweißen stoffschlüssig miteinander verbunden werden. Beim Laserschweißen erfolgt ein hoher Energieeintrag auf einen geringen Querschnitt und dadurch nur eine kleine Zone aufgeschmolzenen Materials. Es erfolgt nur eine geringe Gefügeveränderung. Des Weiteren ist das Schweißwerkzeug verschleißfrei. Beim Laser-Trennen erfolgt ebenfalls ein hoher Energieeintrag auf einen geringen Querschnitt. In diesem Fall ist der Energieeintrag allerdings so hoch, dass der Blechstreifen getrennt wird. Aufgrund der dennoch geringen Einflusszone, die in etwa so groß wie die Trennfuge ist, ergeben sich zwei Kanten mit einer exakten Schnittführung und die Herstellung der Trennfuge verläuft gratfrei. Ein weiterer Vorteil ist, dass die Kante keine Bruchfläche aufweist, wie es typischerweise beim Stanzen der Fall ist. Derartige Bruchflächen verlaufen meist schräg, so dass beim anschließenden Schweißen ein Zuschlagstoff erforderlich ist. Da die durch Laser-Trennen getrennten Kanten keine derartigen schräg oder rauh verlaufenden Bruchflächen aufweist, ist es hier möglich, die einander berührenden Kanten ohne Zuschlagstoff durch Schweißen miteinander zu verbinden. Es ist auch möglich, durch Laser-Trennen an einer oder jeder Kante ein Teilstück zu entfernen. Dadurch wird auch eine genaue, von keinem Umformvorgang beeinflusste, Abwicklungslänge bei geringen Rundungsabweichungen erreicht. Bei dem erfindungsgemäßen Verfahren können in vorteilhafter Weise vorbehandelte, beispielsweise phosphatierte Bleche eingesetzt werden. Diese Vorbehandlung wird durch das erfindungsgemäße Verfahren, insbesondere auch durch das Laser-Trennen und das Laser-Schweißen nur unwesentlich beeinträchtigt. Die Wärmeeinflusszone beim Laser-Trennen und beim Laser-Schweißen ist klein, so dass die Vorbehandlung nur unwesentlich beeinträchtigt ist. Das ist insbesondere deshalb vorteilhaft, weil eine Vorbehandlung der Bleche kostengünstiger ist als eine Vorbehandlung der fertigen Tragringe.

Das Laser-Trennen und das Laserschweißen kann durch eine einzige Laser-Vorrichtung vorgenommen werden. Dadurch lassen sich die Kosten für die Vorrichtung zur Herstellung der Dichtringe senken, da hier nur noch eine Laserquelle erforderlich ist, wobei das Laserlicht über eine Optik zum Laser-Trennen und Laser-Schweißen umgelenkt wird. Dabei wird der Laserstrahl durch Verändern der Brennweite, beispielsweise durch eine verfahrbare Optik, jeweils für das Trennen oder Schweißen angepasst.

Die Schweißnaht kann in einem nachgeschalteten Arbeitsschritt zumindest außenumfangsseitig eingeebnet werden. Vorzugsweise, insbesondere beim Schweißen mit Zuschlagstoff, erfolgt die Prozessführung so, dass sich zumindest außenumfangsseitig entlang der Schweißnaht eine Erhebung ergibt. Diese Erhebung wird in einem nachgeschalteten Arbeitsschritt eingeebnet. Das Einebnen erfolgt dabei vorzugsweise zweistufig durch spanendes Abheben, beispielsweise durch Hobeln, Räumen oder Schleifen und anschließendes Glättrollen. Durch das Rollen werden die durch das Umformen im Gefüge hervorgerufenen Spannungen durch plastisches Umformen reduziert.

Der Ring kann durch Rollen umgeformt werden. Durch das Rollen ist eine große Formenvielfalt mit einem Werkzeug erzielbar. Es können beispielsweise die bekannten topfförmigen Stützringe hergestellt werden. In diese Stützringe können aber auch verschiedene Proflierungen, Hinterschnitte und Vertiefungen eingebracht werden.

Die umlaufenden Kanten des Rings können spanlos profiliert werden. Die umlaufenden Kanten von Ringen, die in Dichtringen verarbeitet werden sollen, weisen vorzugsweise eine Fase auf, durch die sich die Herstellung und auch die Montage des Dichtrings vereinfachen. Derartige Fasen werden häufig spanabhebend, beispielsweise durch Drehen hergestellt. Ein spanloses Verfahren lässt sich aber besser in den Herstellungsprozess integrieren. Dabei erfolgt das Profilieren der Kante vorzugsweise durch Rollen.

Der Ring kann in einem integrierten Verfahrensschritt kalibriert werden. Durch die Kalibrierung verbessert sich die Maßhaltigkeit der Ringe. Da der Außendurchmesser eines Stützrings häufig auch eine Dichtfläche ist, ist die Maßhaltigkeit besonders wichtig, da dadurch der Sitz des Dichtrings in der abzudichtenden Bohrung beeinflusst ist. Schweißverfahren und andere nachfolgende Bearbeitungsschritte können Maßänderungen verursachen, die durch die anschließende Kalibrierung ausgeglichen werden.

In einem erfindungsgemäßen Verfahren zum Kalibrieren wird der Blechstreifen so abgelängt, dass sich zunächst ein Ring mit Untermaß ergibt. Dieser Ring mit Untermaß wird anschließend durch Aufweiten in einer Vorrichtung auf das Sollmaß gebracht. Dadurch wird Ausschuss vermieden, da sich Ringe mit Übermaß nur schwierig auf das Sollmaß bringen lassen. Ringe, die ein Untermaß aufweisen, können dagegen durch Aufweiten auf das Sollmaß gebracht werden.

Durch das erfindungsgemäße Verfahren können also Tragringe in einer großen Formenvielfalt für Dichtringe hergestellt werden.

### Kurzbeschreibung der Zeichnung

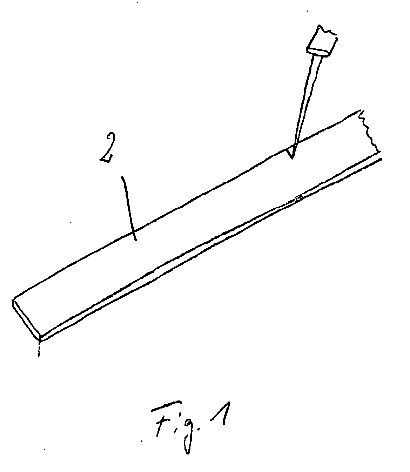

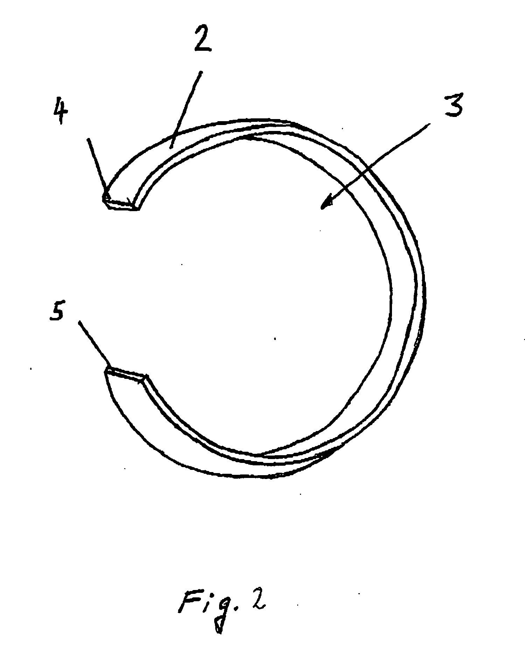

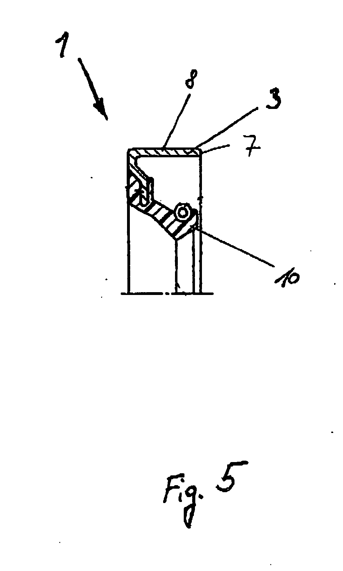

Das erfindungsgemäße Verfahren wird nachfolgend anhand der Figuren näher erläutert. Die Figuren 1 bis 4 zeigen den Herstellungsprozess eines Tragrings einer erfindungsgemäßen Dichtung. Figur 5 zeigt eine erfindungsgemäße Dichtung.

### Ausführung der Erfindung

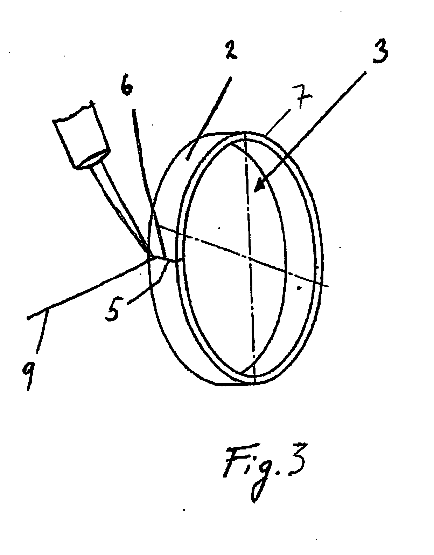

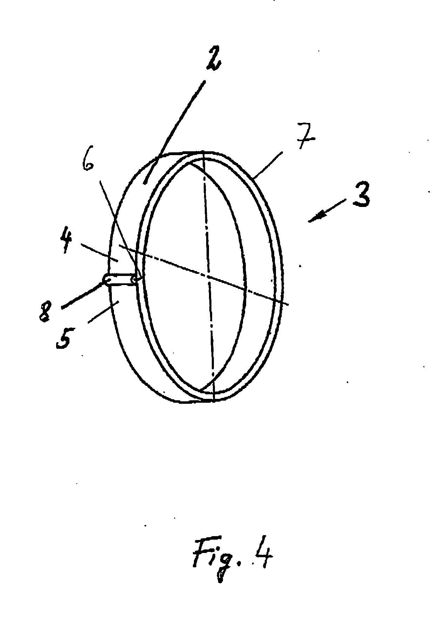

Die Figuren 1 bis 4 zeigen das erfindungsgemäße Verfahren zur Herstellung eines Dichtrings 1. Dabei wird, beispielsweise von einer Rolle, zunächst ein Endlos-Blechstreifen 2 durch Laser-Trennen abgelängt (Figur 1). Die Länge des Blechstreifens 2 wurde dabei so gewählt, dass später ein Ring 3 mit Untermaß entsteht. Anschließend wird durch Rollen aus dem Blechstreifen 2 ein Ring 3 gebildet (Figur 1). In einem nächsten Schritt werden die sich berührenden Kanten 4, 5 des zu einem Ring 3 geformten Blechstreifens 2 stoffschlüssig miteinander verbunden. Dazu werden die Kanten 4, 5 stumpf aneinander geführt und durch Laserstrahlschweißen mit oder ohne Zuführen eines Zuschlagsstoffes 9 stoffschlüssig miteinander verschweißt (Figur 3). Dabei wird die Verbindung so hergestellt, dass sich entlang der Schweißnaht 6 zumindest außenumfangsseitig eine Wulst 8 ergibt (Figur 4). Diese Wulst 8 wird in einer nachgeschalteten Bearbeitung eingeebnet, was hier durch spanendes Bearbeiten und anschließendes Rollen erfolgt. In anderen Ausführungen kann die nachgeschaltete Bearbeitung durch Tiefziehen oder durch ein spanabhebendes Verfahren, wie beispielsweise Drehen, Fräsen oder Schleifen erfolgen. Das Laser-Schweißen und das Laser-Trennen erfolgt durch eine einzige Laserstrahlquelle. Im nächsten Schritt wird der Ring 3 durch Rollen umgeformt und profiliert und die umlaufenden Kanten 7 werden anschließend ebenfalls durch Rollen spanlos profiliert, so dass sich eine Fase ergibt. In einem letzten Schritt wird der Ring 3, der ein Untermaß aufweist, zum Kalibrieren durch eine Vorrichtung geweitet und dadurch auf das Sollmaß gebracht.

Figur 5 zeigt einen Dichtring 1 mit einem Tragring 8. Der Tragring 8 ist durch einen Ring 3 gebildet, der durch das zuvor beschriebene Verfahren hergestellt wurde. An dem Tragring 8 ist eine dynamisch dichtende Dichtlippe 10 anvulkanisiert. Für den Tragring 8 wurde ein Blech 2 verwendet, welches mit einer Phosphatierung vorbehandelt wurde, um die Haftfähigkeit des elastomeren zu verbessern.

## Patentansprüche

1. Verfahren zur Herstellung eines Dichtrings (1), bei dem aus einem Endlos-Blechstreifen (2) ein Ring (3) gebildet wird, wobei der Blechstreifen (2) durch Laser-Trennen auf den Ringumfang abgelängt wird und die einander berührenden Kanten (4, 5) des Blechstreifens (2) durch Laser-Schweißen stoffschlüssig miteinander verbunden werden.

2. Verfahren nach Anspruch 1, **dadurch gekennzeichnet, dass** das Laser-Trennen und das Laser-Schweißen durch eine einzige Laser-Vorrichtung vorgenommen wird.

3. Verfahren nach Anspruch 1 oder 2, **dadurch gekennzeichnet, dass** die Schweißnaht (6) in einem nachgeschalteten Arbeitsschritt zumindest außenumfangsseitig eingeebnet wird.

4. Verfahren nach Anspruch 3, **dadurch gekennzeichnet, dass** das Einebnen der Schweißnaht (6) durch ein kombiniertes spanendes und spanloses bearbeiten erfolgt.

5. Verfahren nach einem der Ansprüche 1 bis 4, **dadurch gekennzeichnet, dass** der Ring (3) durch Rollen umgeformt wird.

6. Verfahren nach einem der Ansprüche 1 bis 5, **dadurch gekennzeichnet, dass** die umlaufenden Kanten (7) des Rings (3) spanlos profiliert werden.

7. Verfahren nach Anspruch 6, **dadurch gekennzeichnet, dass** das Profilieren der umlaufenden Kanten (7) durch Rollen erfolgt.

8. Verfahren nach einem der Ansprüche 1 bis 7, **dadurch gekennzeichnet, dass** der Ring (3) kalibriert wird.

9. Verfahren nach Anspruch 8, **dadurch gekennzeichnet, dass** zum Kalibrieren zunächst ein Ring (3) mit Untermaß hergestellt wird, der durch Aufweiten in einer Vorrichtung auf das Sollmaß gebracht wird.

## Claims

1. Method for producing a sealing ring (1), in which a ring (3) is formed from an endless sheet metal strip (2), the sheet metal strip (2) being brought to the appropriate length for the circumference of the ring by laser cutting and the edges (4, 5) of the sheet metal strip (2) that are touching one another being joined together with a material bond by laser welding.

2. Method according to Claim 1, **characterized in that** the laser cutting and the laser welding are performed by a single laser device.

3. Method according to Claim 1 or 2, **characterized in that** the weld seam (6) is levelled, at least on the outer circumferential side, in a downstream working step.

4. Method according to Claim 3, **characterized in that** the levelling of the weld seam (6) takes place by a combined cutting and non-cutting machining process.

5. Method according to one of Claims 1 to 4, **characterized in that** the ring (3) is shaped by rolling.

6. Method according to one of Claims 1 to 5, **characterized in that** the peripheral edges (7) of the ring (3) are profiled by a non-cutting process.

7. Method according to Claim 6, **characterized in that** the profiling of the peripheral edges (7) takes place by rolling.

8. Method according to one of Claims 1 to 7, **characterized in that** the ring (3) is calibrated.

9. Method according to Claim 8, **characterized in that**, for calibrating, first a ring (3) is produced with undersize and then it is brought to the desired size by expanding in a device.

## Revendications

1. Procédé pour la fabrication d'une bague d'étanchéité (1), dans lequel on forme une bague (3) à partir d'un ruban de tôle sans fin (2), dans lequel on coupe à longueur le ruban de tôle (2) sur la périphérie de la bague par découpage au laser et on assemble l'une à l'autre les arêtes jointives (4, 5) du ruban de tôle (2) en complémentarité de matière par soudage au laser.

2. Procédé selon la revendication 1, **caractérisé en ce que** le découpage au laser et le soudage au laser sont effectués par un seul dispositif laser.

3. Procédé selon la revendication 1 ou 2, **caractérisé en ce que** l'on aplanit le cordon de soudure (6) au moins du côté de la périphérie extérieure au cours d'une étape de travail qui suit.

4. Procédé selon la revendication 3, **caractérisé en ce que** l'on effectue l'aplanissement du cordon de soudure (6) par un usinage combiné avec et sans enlèvement de copeaux.

5. Procédé selon l'une quelconque des revendications 1 à 4, **caractérisé en ce que** l'on déforme la bague (3) par roulage.

6. Procédé selon l'une quelconque des revendications 1 à 5, **caractérisé en ce que** l'on profile les arêtes périphériques (7) de la bague (3) sans enlèvement de copeaux.

7. Procédé selon la revendication 6, **caractérisé en ce que** l'on effectue le profilage des arêtes périphériques (7) par roulage.

8. Procédé selon l'une quelconque des revendications 1 à 7, **caractérisé en ce que** l'on effectue le calibrage de la bague (3).

9. Procédé selon la revendication 8, **caractérisé en ce que**, pour le calibrage, on fabrique d'abord une bague (3) sous-dimensionnée, que l'on porte à la dimension désirée par expansion dans un dispositif.
